# FASCICULE DE BREVET EUROPEEN

(11) **EP 0 695 403 B1**
(45) Date de publication et mention de la délivrance du brevet: **15.01.1997**
(21) Numéro de dépôt: 94913086.8
(22) Date de dépôt: 30.03.1994
(51) Int. Cl.: F16D 65/16

(54) **MOTEUR DE FREIN A RAMPE**
BREMSBETÄTIGUNGSVORRICHTUNG MIT RAMPE
BRAKE MOTOR PROVIDED WITH A RAMP

(30) Priorité: 30.04.1993 IT TO930299
(43) Date de publication de la demande: 07.02.1996
(73) Titulaire: AlliedSignal Freni S.p.A., 70026 Modugno (IT)
(72) Inventeur: TRIBUZIO, Pasquale, I-70032 Bitonto (IT); ERRICO, Angelantonio, Contrada Lamazzevinna, I-70054 C.P. 26 Giovinazzo (IT)
(74) Mandataire: Bentz, Jean-Paul
(86) Numéro de dépôt international: EP9400997
(87) Numéro de publication internationale: WO9425774

(56) Documents cités:
- WO-A-92/07202
- DE-A- 4 217 983
- DE-C- 3 505 773
- FR-A- 2 052 775

## Description

La présente invention concerne un dispositif mécanique pour actionner un piston par rapport à un cylindre, notamment dans un frein à disque, ce dispositif comprenant un poussoir solidaire en translation du piston, un levier monté rotatif par rapport au cylindre dans un plan axial de ce dernier, une rotule reliant une extrémité du levier à une extrémité du poussoir pour permettre une rotation relative de ce levier et de ce poussoir, un moyen de guidage en translation du poussoir dans le cylindre, une surface de roulement fixe par rapport au cylindre et formant came, et des moyens de roulement prenant appui sur la surface formant came pour permettre le roulement du levier sur cette surface, ce roulement s'accompagnant d'une rotation de ce levier autour de la rotule et d'une translation de cette rotule et du poussoir par rapport au cylindre.

Des dispositifs de ce type sont bien connus dans l'art antérieur et un exemple en est donné par le document WO 92/07202.

La conception de ces dispositifs est soumise à de multiples contraintes incluant notamment des exigences de rendement mécanique et de faible coût de fabrication.

Bien que le document antérieur précédemment identifié concerne un frein conçu avec le souci de répondre à ces exigences, la cinématique du système qu'il décrit se trouve affectée par la structure retenue, le poussoir ne pouvant être animé d'un pur mouvement de translation.

Dans ce contexte, la présente invention a pour but de proposer un moteur de frein du type précédemment défini, de structure simple, mais permettant néanmoins d'animer le poussoir d'un pur mouvement de translation axiale.

A cette fin, le dispositif de l'invention est essentiellement caractérisé en ce que les moyens de roulement ne sont en appui sur la surface de roulement qu'en un seul point du plan axial du cylindre.

Selon un mode de réalisation simple et efficace, la rotule est constituée par une bille enserrée entre l'extrémité du poussoir et l'extrémité du levier et les moyens de roulement sont constitués d'un galet monté à rotation sur le levier.

Par exemple, la surface formant came peut être essentiellement constituée par un plan incliné et le poussoir peut être sollicité vers le levier par au moins une rondelle Belleville.

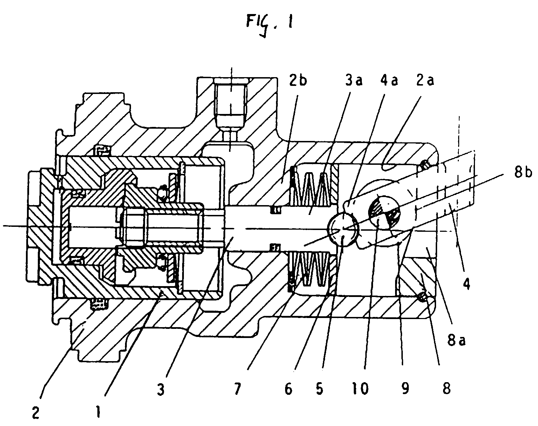

D'autres caractéristiques et avantages de l'invention pourront ressortir de la description qui en est faite ci-après, à titre indicatif et nullement limitatif, en référence au dessin annexé dont l'unique figure est une vue en coupe d'un dispositif conforme à l'invention.

Le dispositif concerné, principalement destiné à permettre l'actionnement mécanique du piston 1 d'un frein à disque par rapport au cylindre 2 de ce dernier, comprend essentiellement un poussoir 3 solidaire en translation du piston, un levier 4 monté rotatif par rapport au cylindre 2 dans un plan axial de ce dernier, à savoir le plan de la figure, et une rotule constituée par une bille 5 enserrée entre l'extrémité 3a du poussoir et l'extrémité 4a du levier et reliant ces extrémités pour permettre une rotation relative de ce levier et de ce poussoir.

Le poussoir est solidaire d'un moyen de guidage en translation, prenant par exemple la forme d'une plaque 6 susceptible de coulisser dans un alésage 2a du cylindre, et le poussoir 3 est sollicité vers le levier 4 par un empilage de rondelles Belleville, telles que 7, tendant à repousser la plaque de guidage 6 d'une partie fixe 2b du cylindre.

Une surface de roulement 8, fixe par rapport au cylindre 2 et essentiellement constituée par un plan incliné formant came, ferme l'alésage 2a de ce cylindre à l'extrémité opposée de celle où coulisse le piston 1.

Une ouverture 8a pratiquée dans cette surface et allongée dans le plan de la figure permet à cette surface d'être traversée par le levier 4.

Un galet 9, monté à rotation sur un point fixe du levier 4 au moyen d'un roulement à rouleaux 10, prend appui sur la surface 8 formant came pour permettre le roulement du levier sur cette surface, ce roulement s'accompagnant d'une rotation de ce levier autour de la bille 5 et d'une translation de cette bille, du poussoir 3 et du piston 1 par rapport au cylindre 2.

Selon l'invention, l'organe de roulement que constitue le galet 9 n'est en appui sur la surface de roulement 8 qu'en un seul point 8b du plan axial du cylindre, ce dont il résulte que le poussoir est animé d'un pur mouvement de translation axiale.

Il faut bien comprendre que le point 8b en question est celui qui correspond à la trace, dans le plan axial du dispositif qui contient le mouvement de rotation du levier, de la zone dans laquelle la surface de roulement 8 et le galet 9 sont tangents l'un à l'autre.

A ce titre, le point 8b n'a en réalité qu'une existence virtuelle dans le mode de réalisation illustré, puisque le plan axial, constitué par le plan de la figure, passe en l'occurrence par l'ouverture 8a, au niveau de laquelle le galet 9 et la surface de roulement 8 ne peuvent pas se trouver en contact l'un avec l'autre.

Selon une variante avantageuse de l'invention, le levier 4 peut être doté d'un galet tel que 9 de part et d'autre de l'ouverture allongée 8a, de manière à éviter l'apparition de toute force perpendiculaire au plan axial, c'est-à-dire au plan de la figure.

## Revendications

1. Dispositif mécanique pour actionner un piston (1) par rapport à un cylindre (2), notamment dans un frein à disque, ce dispositif comprenant un poussoir (3) solidaire en translation du piston, un levier (4) monté rotatif par rapport au cylindre (2) dans un plan axial de ce dernier, une rotule (5) reliant une extrémité (4a) du levier à une extrémité (3a) du poussoir pour permettre une rotation relative de ce levier et de ce poussoir, un moyen de guidage en translation (6) du poussoir dans le cylindre, une surface de roulement (8) fixe par rapport au cylindre et formant came, et des moyens de roulement (9) prenant appui sur la surface formant came pour permettre le roulement du levier sur cette surface, ce roulement s'accompagnant d'une rotation de ce levier autour de la rotule et d'une translation de cette rotule et du poussoir par rapport au cylindre, caractérisé en ce que les moyens de roulement (9) ne sont en appui sur la surface de roulement (8) qu'en un seul point (8b) dudit plan axial, ce dont il résulte que le poussoir est animé d'un pur mouvement de translation axiale.

2. Dispositif suivant la revendication 1, caractérisé en ce que la rotule (5) est constituée par une bille enserrée entre l'extrémité (3a) du poussoir et l'extrémité (4a) du levier.

3. Dispositif suivant la revendication 1 ou 2, caractérisé en ce que les moyens de roulement sont constitués d'un galet monté à rotation sur le levier.

4. Dispositif suivant l'une quelconque des revendications précédentes, caractérisé en ce que la surface formant came comprend essentiellement un plan incliné.

5. Dispositif suivant la revendication 4, caractérisé en ce que le poussoir est sollicité vers le levier par au moins une rondelle Belleville (7).

## Patentansprüche

1. Mechanische Vorrichtung zur Betätigung eines Kolbens (1) bezüglich eines Zylinders (2), insbesondere bei einer Scheibenbremse, wobei diese Vorrichtung einen mit dem Kolben translationsfest verbundenen Stößel (3) enthält, sowie einen Hebel (4), der bezüglich des Zylinders (2) drehbar in einer axialen Ebene von diesem angeordnet ist, ein Kugelgelenk (5), das ein Ende (4a) des Hebels mit einem Ende (3a) des Stößels verbindet, um eine Relativdrehung zwischen dem Hebel und dem Stößel zu ermöglichen, ein Mittel (6) zum translatorischen Führen des Stößels in dem Zylinder, eine Abrollfläche (8), die bezüglich des Zylinders feststeht und eine Kurvenfläche bildet, und Abrollmittel (9), die an der die Kurvenfläche bildenden Fläche anliegen, um dem Hebel das Abrollen auf dieser Fläche zu ermöglichen, wobei dieses Abrollen von einer Drehung des Hebels um das Kugelgelenk und einer Translation dieses Kugelgelenks und des Stößels bezüglich des Zylinders begleitet ist, dadurch gekennzeichnet, daß die Abrollmittel (9) an der Abrollfläche (8) nur an einer einzigen Stelle (8b) der axialen Ebene anliegen, woraus sich ergibt, daß der Stößel nur in eine rein axiale Translationsbewegung versetzt wird.

2. Vorrichtung nach Anspruch 1, dadurch gekennzeichnet, daß das Kugelgelenk (5) durch eine Kugel gebildet ist, die zwischen dem Ende (3a) des Stößels und dem Ende (4a) des Hebels eingespannt ist.

3. Vorrichtung nach Anspruch 1 oder 2, dadurch gekennzeichnet, daß die Abrollmittel durch eine Rolle gebildet sind, die drehbar an dem Hebel angebracht ist.

4. Vorrichtung nach einem der vorhergehenden Ansprüche, dadurch gekennzeichnet, daß die eine Kurvenfläche bildende Fläche im wesentlichen eine geneigte Ebene enthält.

5. Vorrichtung nach Anspruch 4, dadurch gekennzeichnet, daß der Stößel durch wenigstens eine Belleville-Scheibe (7) zu dem Hebel beaufschlagt ist.

## Claims

1. Mechanical device for actuating a piston (1) with respect to a cylinder (2), particularly in a disk brake, this device comprising a push rod (3) translationally secured to the piston, a lever (4) mounted so that it can rotate with respect to the cylinder (2) in an axial plane of the latter, a ball joint (5) joining one end (4a) of the lever to one end (3a) of the push rod to allow a relative rotation of this lever and of this push rod, a means (6) for translationally guiding the push rod in the cylinder, a rolling surface (8) which is fixed with respect to the cylinder and which forms a cam, and rolling means (9) bearing on the surface forming a cam to allow the lever to roll over this surface, this rolling being accompanied by a rotation of this lever about the ball joint and by a translation of this ball joint and of the push rod with respect to the cylinder, characterized in that the rolling means (9) bears on the rolling surface (8) at only one single point (8b) of the said axial plane, whence it results that the push rod is given a pure axial translational movement.

2. Device according to claim 1, characterized in that the ball joint (5) consists of a ball trapped between the end (3a) of the push rod and the end (4a) of the lever.

3. Device according to claim 1 or 2, characterized in that the rolling means is formed by a roller mounted so that it can rotate on the lever.

4. Device according to any one of the preceding claims, characterized in that the surface which forms a cam essentially comprises an inclined plane.

5. Device according to claim 4, characterized in that the push rod is urged toward the lever by at least one Belleville washer (7).
